(19) Europäisches Patentamt
European Patent Office
Office européen des brevets

(11) Veröffentlichungsnummer: 0 343 453
A1

(12) # EUROPÄISCHE PATENTANMELDUNG

(21) Anmeldenummer: 89108572.2

(51) Int. Cl.4: B65B 53/00

(22) Anmeldetag: 12.05.89

(30) Priorität: 27.05.88 DE 8806949 U

(43) Veröffentlichungstag der Anmeldung:
29.11.89 Patentblatt 89/48

(84) Benannte Vertragsstaaten:
AT BE CH DE ES FR GB IT LI NL SE

(71) Anmelder: MSK-Verpackungs-Systeme Gesellschaft mit beschränkter Haftung
Benzstrasse Postfach 1610
D-4190 Kleve(DE)

(72) Erfinder: Hannen, Reiner
Nachtigallenweg 6
D-4180 Goch-Pfalzdorf(DE)

(74) Vertreter: Stark, Walter, Dr.-Ing.
Moerser Strasse 140
D-4150 Krefeld(DE)

(54) **Verfahren und Vorrichtung zum Umwickeln eines insbesondere palettierten Gutstapels mit einer Kunststoffolienbahn.**

(57) Die Erfindung betrifft Verfahren zum Umwickeln eines insbesondere palettierten Gutstapels mit einer wenigstens in Längsrichtung gereckten Kunststoffolienbahn, wobei die Folienbahn unmittelbar vor dem Umwickeln gereckt wird und der Gutstapel mit der Palette spiralförmig mit der Folienbahn so umwickelt wird, daß die benachbarten Wickellagen einander teilweise überlappen. Die Erfindung betrifft auch eine Vorrichtung zur Durchführung des Verfahrens. Um durch Umwickeln eines insbesondere palettierten Gutstapels mit einer Kunststofffolienbahn eine Verspannung nicht nur horizontal, sondern auch vertikal zu erreichen, soll die Folienbahn unmittelbar vor dem Umwickeln auch in Querrichtung gereckt werden.

FIG.1

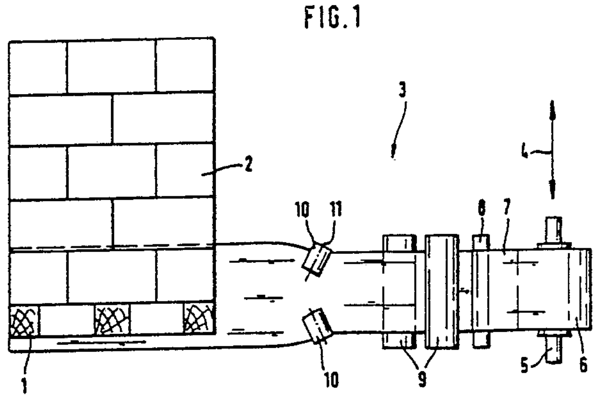


EP 0 343 453 A1

## Verfahren und Vorrichtung zum Umwickeln eines insbesondere palettierten Gutstapels mit einer Kunststoffolienbahn

Die Erfindung betrifft ein Verfahren zum Umwickeln eines insbesondere palettierten Gutstapels mit einer wenigstens in Längsrichtung gereckten Kunststoffolienbahn, wobei die Folienbahn unmittelbar vor dem Umwickeln gereckt wird und der Gutstapel mit der Palette spiralförmig mit der Folienbahn so umwickelt wird, daß die benachbarten Wikkellagen eineinander teilweise überlappen. Die Erfindung betrifft auch eine Vorrichtung zur Durchführung des Verfahrens.

Bei einem aus der Praxis bekannten Verfahren wird eine ca. 500 mm breite Folienbahn aus Kunststoff um die Palette und den Gutstapel herumgewickelt. Man beginnt unten an der Palette, wickelt spiralförmig einmal nach oben und dann wieder zurück. Je nach der geforderten Stabilität werden die Wickellagen einander mehr oder weniger überlappend gewickelt. Es können auch mehrere Lagen übereinander gewickelt werden.

Zum Umwickeln verwendet man Polyäthylenfolie, die unmittelbar vor dem Umwickeln in Längsrichtung gereckt wird. Dadurch kann die Folienbahn relativ locker um die Palette und den Gutstapel gewickelt werden. Im Laufe der Zeit geht die Rekkung wieder zurück und die Folienbahn spannt den Gutstapel auf der Palette horizontal zusammen. Nachteilig dabei ist, daß eine hinreichende Verbindung zwischen Palette und Gutstapel fehlt, wie man sie bei Verwendung von Schrumpfhauben kennt, deren unterer Rand vor dem Schrumpfen unter die Palette geschlagen wird. Mit anderen Worten erreicht man mit dem gattungsgemäßen Verfahren keine ausreichende Haltekraft in vertikaler Richtung zwischen Palette und Gutstapel.

Aufgabe der Erfindung ist es, durch Umwickeln eines insbesondere palettierten Gutstapels mit einer Kunststoffolienbahn eine Verspannung nicht nur horizontal, sondern auch vertikal zu erreichen.

Diese Aufgabe wird dadurch gelöst, daß die Folienbahn unmittelbar vor dem Umwickeln auch in Querrichtung gereckt wird. Da die Folienbahn sowohl in Längsrichtung als auch in Querrichtung in kaltem Zustand gereckt wird, geht die Reckung nach dem Umwickeln in beiden Richtungen zurück, so daß entsprechende Haltekräfte in beiden Richtungen auf den Gutstapel und/oder die Palette ausgeübt werden. Damit die einzelnen, einander überlappenden Wickellagen besser aneinander haften, können die überlappenden Ränder der Wickellagen miteinander verschweißt werden, z. B. durch Rollradverschweißung, Vibrationsverschweißung, Heibluftverschweißung, Infrarotverschweißung oder dergleichen. Das hat den besonderen Vorteil, daß das Folienmaterial nicht durch andere Stoffe "verunreinigt" ist und ohne weiteres durch Recycling wieder aufgearbeitet werden kann, nachdem es vom Gutstapel und der Palette entfernt worden ist. Die einander überlappenden Ränder der Wikkellagen können aber auch miteinander verklebt werden, z. B. durch Aufbringen eines Sprühklebers oder mit Hilfe eines Klebebandes.

Das erfindungsgemäße Verfahren läßt vorteilhaft durchführen mit einer Vorrichtung, zu der eine Stellfläche für den Gutstapel und eine Wickeleinrichtung gehört, die relativ zueinander beweglich sind, wobei die Wickeleinrichtung eine Aufnahme für eine Folienwickel und eine Rollenanordnung zum Recken der Folienbahn aufweist. Diese Vorrichtung ist erfindungsgemäß gekennzeichnet durch mehrere über die Breite der Folienbahn verteilte Rollenpaare, wobei die einzelnen Rollenpaare bzw. ihre Rollrichtung bezogen auf die Längsrichtung der Folienbahn fächerförmig ausgerichtet sind. Wesentlich für den Erfolg der Erfindung ist es, daß die Folienbahn über ihre Breite an mehreren Stellen unter der Wirkung der Rollenpaare den Reckkräften ausgesetzt ist, weil nur dann sichergestellt ist, daß eine gleichmäßige Reckung der Folienbahn, insbesondere in Querrichtung erfolgt. Nach bevorzugter Ausführung können die Rollenachsen der Rollenpaare ausgehend von der Mitte der Folienbahn zunehmend kleinere Winkel zur Längsrichtung der Folienbahn aufweisen, so daß die neben der Mitte der Folienbahn angeordneten Rollenpaare mit ihren Rollenachsen einen Winkel von etwas weniger als 90 ° zur Längsrichtung der Folienbahn einnehmen und die Winkel der Rollenachsen der weiter außen liegenden Rollenpaare entsprechend kleiner werden.

Es kann vorteilhaft sein, wenn die Rollenpaare, bezogen auf die Mitte der Folienbahn, auf einem Kreisbogen angeordnet sind, weil dann das Material der Folienbahn gleichsam fächerförmig längs einer kreisförmigen Recklinie gereckt wird. Man kann die Rollenpaare aber auch längs anderer Kurven anordnen.

Eine bevorzugte Ausführung der Erfindung ist gekennzeichnet durch zwei oder mehr in Längsrichtung der Folienbahn hintereinander angeordnete Rollenanordnungen, die bezogen auf die Ebene der Folienbahn gegeneinander versetzt sind. Dadurch wird der Kontakt der Folienbahn mit den einzelnen Rollenpaaren verbessert und die Reckverhältnisse können im einzelnen besser gesteuert werden. Insbesondere sollte der gegenseitige Versatz der Rollenanordnungen derart sein, daß der Umschlingungswinkel der Folienbahn an den Rollen wenigstens 130 bis 150 °, vorzugsweise 180 ° beträgt.

Die Reckverhältnisse können gesteuert und kontrolliert werden nicht nur durch Veränderung des Umschlingungswinkels, sondern auch dadurch, daß der Anpressdruck zwischen den Rollen der Rollenpaare einzeln verstellbar ist und/oder dadurch, daß die Winkel der Rollenachsen der Rollenpaare einzeln verstellbar sind.

Im folgenden werden in der Zeichnung dargestellte Ausführungsbeispiele der Erfindung erläutert; es zeigen:

Fig. 1 in schematischer Darstellung eine Seitenansicht einer Vorrichtung zum Umwickeln eines palettierten Gutstapels mit einer Kunststoffolienbahn,

Fig. 2 eine Draufsicht auf den Gegenstand nach Fig. 1,

Fig. 3 teilweise den Gegenstand nach Fig. 1 in vergrößerter Darstellung,

Fig. 4 eine andere Ausführung des Gegenstandes nach Fig. 1,

Fig. 5 teilweise eine Draufsicht auf den Gegenstand nach Fig. 4.

In Fig. 1 ist eine Palette 1 mit einem darauf angeordneten Gutstapel 2 dargestellt. Der palettierte Gutstapel 2 ruht auf einer im einzelnen nicht dargestellten Stellfläche. Neben dem palettierten Gutstapel befindet sich eine Wickeleinrichtung 3, die um den palettierten Gutstapel 2 herum und außerdem vertikal in Richtung des Doppelpfeils 4 beweglich ist, so daß sie auf dem Weg um den palettierten Gutstapel herum eine spiralförmige Bewegung ausführt. Es ist selbstverständlich auch möglich, die Stellfläche für den Gutstapel 2 drehbar und die Wickeleinrichtung 3 stationär anzuordnen. Zur Wickeleinrichtung 3 gehört eine Aufnahme 5 für einen Folienwickel 6, von dem eine Folienbahn 7 abgezogen wird, mit der die Palette 1 und der Gutstapel 2 umwickelt werden. Zur Wickeleinrichtung 3 gehört ferner eine Rollenanordnung zum Recken der abgezogenen Folienbahn 7. Bei der in Fig. 1 dargestellten Ausführung läuft die Folienbahn 7 zunächst über eine Umlenkwalze 8 und ein Reckwalzenpaar 9 zur Reckung in Längsrichtung der Folienbahn 7. Anschließend gelangt die Folienbahn 7 zu einer Rollenanordnung aus mehreren über die Breite der Folienbahn 7 verteilt angeordneten Rollenpaaren 10, die bei der dargestellten Ausführung so angeordnet sind, daß die Rollenachsen 11 der Rollenpaare 10 ausgehend von der Mitte der Folienbahn 7 zunehmend kleinere Winkel in Längsrichtung der Folienbahn 7 aufweisen. Dadurch wird die zwischen den Rollen der einzelnen Rollenpaare 10 geführte Folienbahn 7 sowohl in Längsrichtung als auch in Querrichtung gereckt.

Aus der Darstellung in Fig. 3 entnimmt man, daß die Rollenpaare 10 auf einem Kreisbogen angeordnet sein können, wie das im unteren Teil der Fig. 3 angedeutet ist, ober aber auch längs einer anderen Kurve angeordnet sein können, wie das im oberen Teil der Fig. 3 wiedergegeben ist. Stets ist die Anordnung so, daß die einzelnen Rollenpaare 10 bzw. ihre Rollrichtungen bezogen auf die Längsrichtung der Folienbahn 7 fächerförmig ausgerichtet sind. Nicht dargestellt ist, daß der Anpressdruck zwischen den Rollen der Rollenpaare 10 einzeln verstellbar ist. Ferner können auch die Winkel der Rollenachsen 11 der Rollenpaare 10 einzeln verstellt werden.

Bei der in den Fig. 4 und 5 dargestellten Ausführung bezeichnen gleiche Bezugszeichen gleiche Teile. Hierbei sind hinter der Umlenkwalze 8 zwei in Längsrichtung der Folienbahn 7 hintereinander angeordnete Rollenanordnungen 10, 12 vorgesehen, die bezogen auf die Ebene der Folienbahn 7 so gegeneinander versetzt sind, daß die Folienbahn 7 die einzelnen Rollen der Rollenpaare 10 bzw. 12 mit einem Umschlingungswinkel von ca. 180° überläuft. Die Rollenanordnungen mit den Rollenpaaren 10 bzw. 12 sind unabhängig voneinander insbesondere in Richtung der Doppelpfeile 13 bzw. 14 verstellbar, so daß der Umschlingungswinkel der Folienbahn 7 auch geändert werden kann. Der Antriebsdruck der Rollen jedes einzelnen Rollenpaares 10 bzw. 12 ist veränderbar. Ebenso können die Winkel der Rollenachsen der einzelnen Rollenpaare 10 bzw. 12 unabhängig voneinander verstellt werden.

Unter der Wirkung der Rollenpaare 10 und 12 erfährt die Folienbahn 7 eine Reckung nicht nur in Längsrichtung sondern auch in Querrichtung, bevor sie über eine weitere Umlenkwalze 15 geführt und dann um die Palette 1 und den Gutstapel 2 gewikkelt wird. Die einander überlappenden Ränder der einzelnen Wickellagen werden in nicht dargestellter Weise miteinander verbunden, z. B. miteinander verschweißt. Die Reckung der um die Palette 1 und den Gutstapel 2 gewickelten Folienbahn 7 läßt im Laufe der Zeit - zum Teil bis zu einigen Stunden - nach und zwar sowohl in Längsrichtung als auch in Querrichtung der Folienbahn, so daß der Gutstapel 2 nicht nur in horizontaler Richtung, sondern auch in vertikaler Richtung fest und mit der Palette 1 verspannt wird.

## Ansprüche

1. Verfahren zum Umwickeln eines inbesondere palettierten Gutstapels mit einer wenigstens in Längsrichtung gereckten Kunststoffolienbahn, wobei die Folienbahn unmittelbar vor dem Umwickeln gereckt wird und der Gutstapel mit der Palette spiralförmig mit der Folienbahn so umwickelt wird, daß die benachbarten Wickelbahnen einander teilweise überlappen, dadurch gekennzeichnet, daß die Folienbahn (7) unmittelbar vor dem Umwickeln auch in Querrichtung gereckt wird.

2. Verfahren nach Anspruch 1, dadurch gekennzeichnet, daß die einander überlappenden Ränder der Wickellagen miteinander verschweißt werden.

3. Verfahren nach Anspruch 1, dadurch gekennzeichnet, daß die einander überlappenden Ränder der Wickellagen miteinander verklebt werden.

4. Vorrichtung zur Durchführung des Verfahrens nach Anspruch 1, mit einer Stellfläche für den Gutstapel und mit einer Wickeleinrichtung, die relativ zueinander beweglich sind, wobei die Wickeleinrichtung eine Aufnahme für einen Folienwickel und eine Rollenanordnung zum Recken der Folienbahn aufweist, gekennzeichnet durch mehrere über die Breite der Folien bahn (7) verteilte Rollenpaare (10, 12), wobei die einzelnen Rollenpaare (10, 12) bzw. ihre Rollrichtungen bezogen auf die Längsrichtung der Folienbahn (7) fächerförmig ausgerichtet sind.

5. Vorrichtung nach Anspruch 4, dadurch gekennzeichnet, daß die Rollenachsen (11) der Rollenpaare (10, 12) ausgehend von der Mitte der Folienbahn (7) zunehmend kleinere Winkel zur Längsrichtung der Folienbahn (7) aufweisen.

6. Vorrichtung nach Anspruch 4 oder 5, dadurch gekennzeichnet, daß die Rollenpaare (10, 12) bezogen auf die Mitte der Folienbahn (7) auf einem Kreisbogen angeordnet sind.

7. Vorrichtung nach einem der Ansprüche 4 bis 6, gekennzeichnet durch zwei oder mehr in Längsrichtung der Folienbahn (7) hintereinander angeordnete Rollenanordnungen (10, 12), die bezogen auf die Ebene der Folienbahn (7) gegeneinander versetzt sind.

8. Vorrichtung nach Anspruch 7, gekennzeichnet durch einen gegenseitigen Versatz der Rollenanordnungen (10, 12) derart, daß der Umschlingungswinkel der Folienbahn (7) an den Rollen wenigstens 130 bis 150 ° beträgt.

9. Vorrichtung nach Anspruch 8, gekennzeichnet durch einen gegenseitigen Versatz der Rollenanordnungen (10, 12) derart, daß der Umschlingungswinkel der Folienbahn (7) an den Rollen 180 ° beträgt.

10. Vorrichtung nach einem der Ansprüche 4 bis 9, dadurch gekennzeichnet, daß der Anpressdruck zwischen den Rollen der Rollenpaare (10, 12) einzeln ver stellbar ist.

11. Vorrichtung nach einem der Ansprüche 4 bis 10, dadurch gekennzeichnet, daß die Winkel der Rollenachsen (11) den Rollenpaare (10, 12) einzeln verstellbar sind.

FIG.1

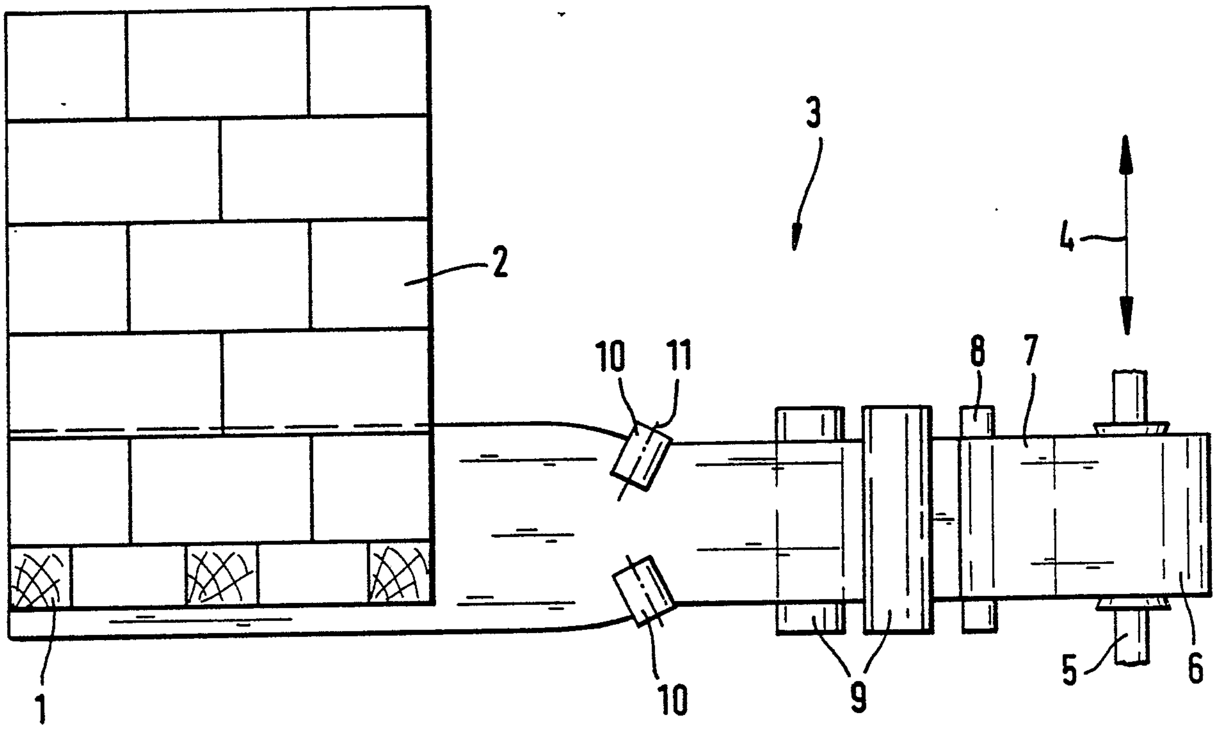


FIG.2

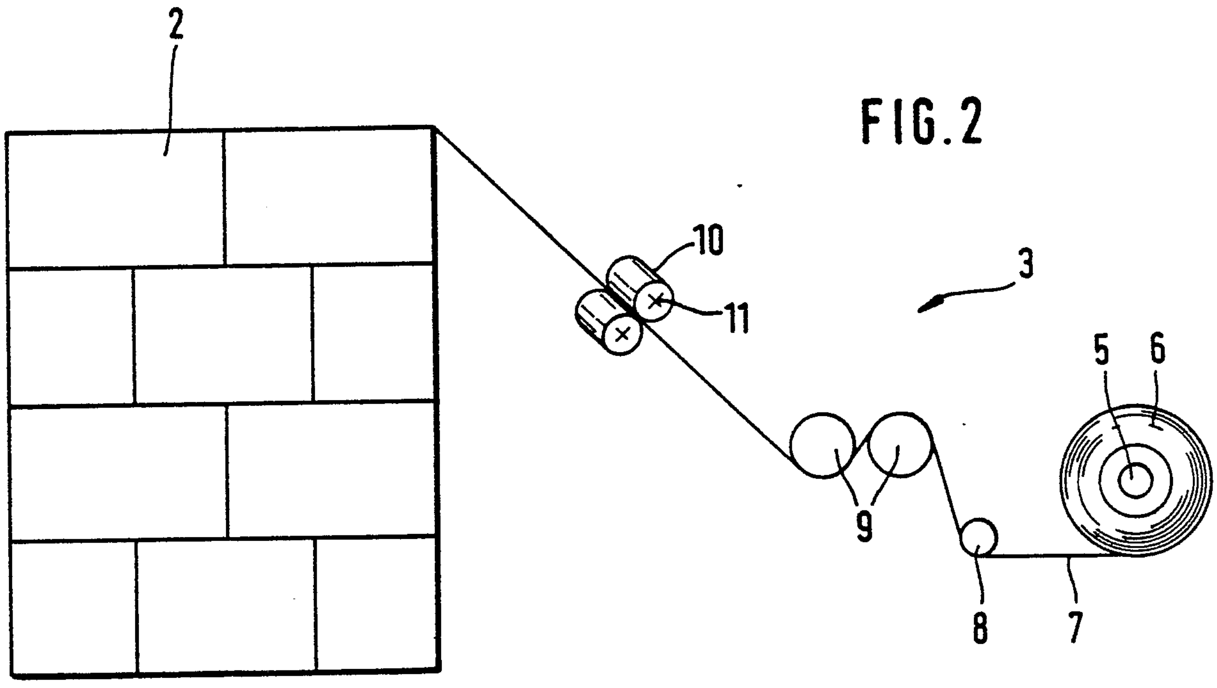


kr 88 123

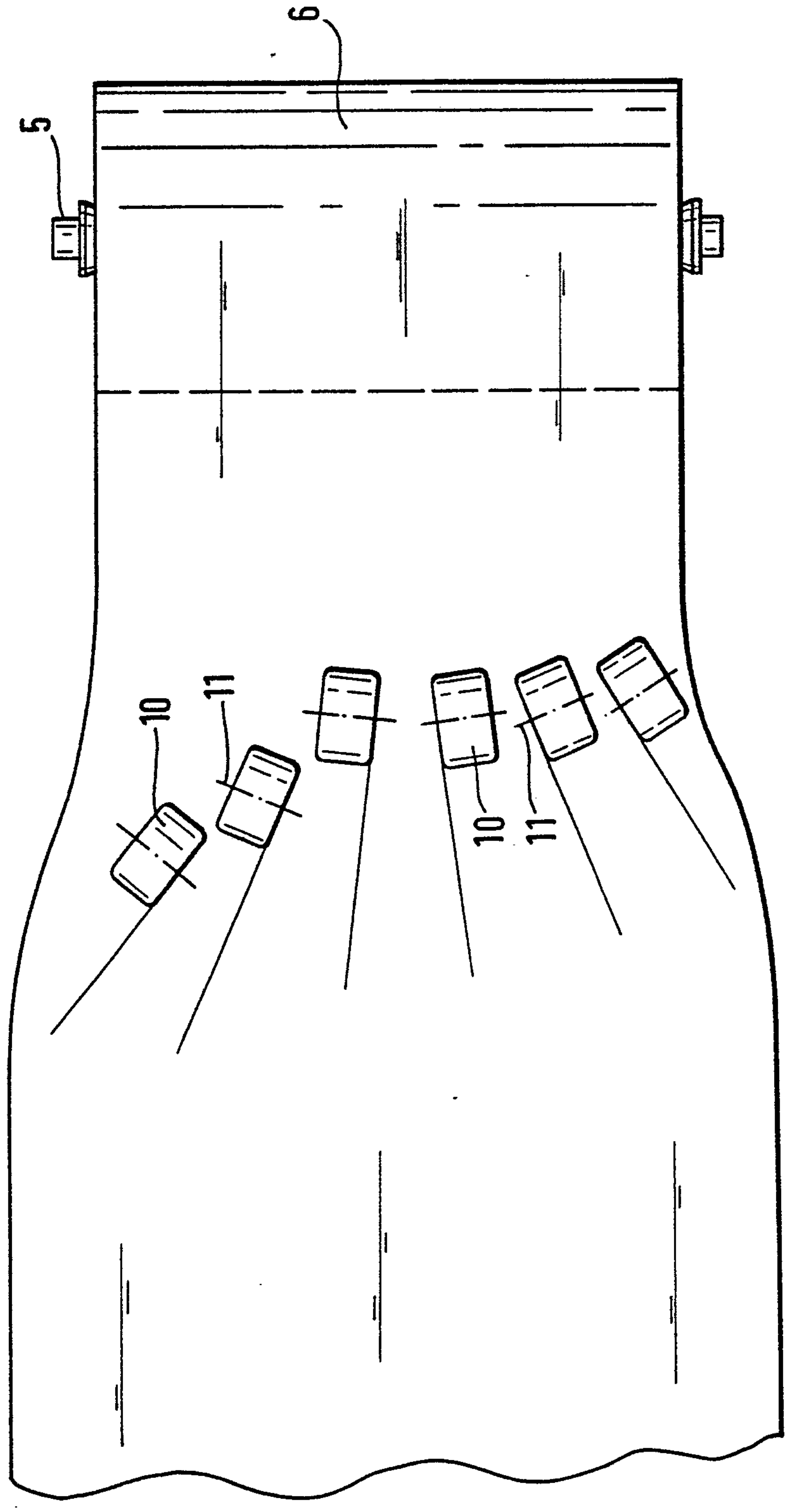


FIG. 3

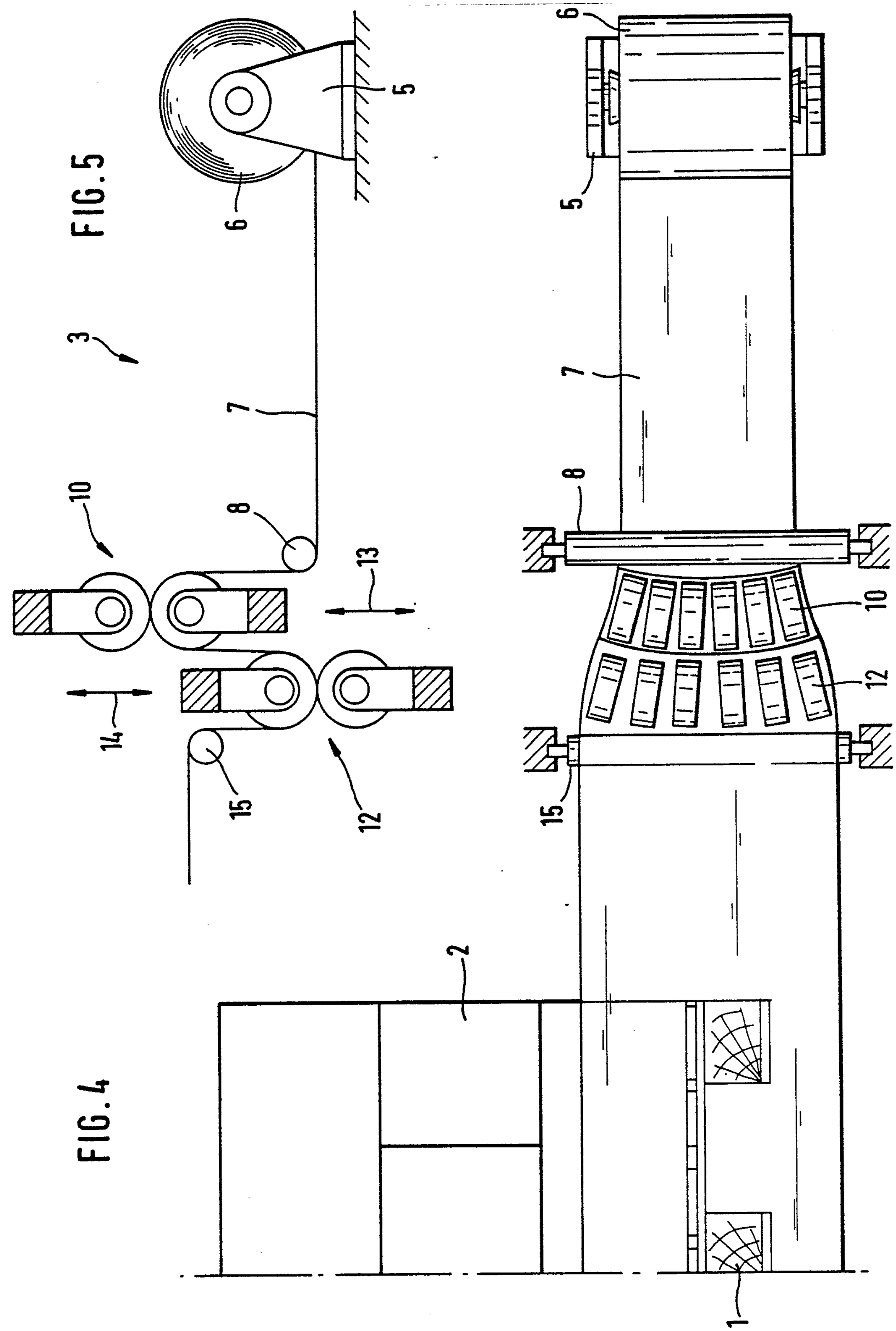


FIG. 5

FIG. 4

Europäisches Patentamt

# EUROPÄISCHER RECHERCHENBERICHT

Nummer der Anmeldung

EP 89 10 8572

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y<br>A | US-A-4 497 159 (LANCASTER)<br>* Zusammenfassung; Figur 1 * | 1-3<br>4 | B 65 B 53/00 |
| Y<br>A | US-A-2 914 893 (BERST)<br>* Spalte 4, Zeilen 33-44; Figuren 1-3 * | 1-3<br>4 | |
| Y | NL-A-6 818 230 (OHLER)<br>* Seite 5, Zeilen 18-27; Figur 1 * | 2,3 | |

RECHERCHIERTE SACHGEBIETE (Int. Cl.4)

B 65 B
B 65 D
B 31 C
B 29 C

Der vorliegende Recherchenbericht wurde für alle Patentansprüche erstellt

| Recherchenort | Abschlußdatum der Recherche | Prüfer |
|---|---|---|
| DEN HAAG | 23-08-1989 | CLAEYS H.C.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)